# EUROPEAN PATENT SPECIFICATION

(11) **EP 0 857 408 B1**
(45) Date of publication and mention of the grant of the patent: **09.04.2003**
(21) Application number: 98200160.4
(22) Date of filing: 22.01.1998
(51) Int. Cl.: A01B 63/114, A01B 63/00, A01B 3/42

(54) **A gravity actuated, moveable mounting.**
Schwerkraftbetriebene, bewegbare Aufhängung
Montage mobile, actionné par force de gravité

(30) Priority: 28.01.1997 GB 9701663
(43) Date of publication of application: 12.08.1998
(73) Proprietor: CNH U.K. LIMITED, Basildon, Essex SS14 3AD (GB)
(72) Inventor: Scarlett, Andrew J., Shefford, Bedfordshire SG17 5EY (GB); Miles, Simon J., Barton-le-Clay, Bedford MK45 4NY (GB)
(74) Representative: Vandenbroucke, Alberic

(56) References cited:
- DE-A- 2 837 778
- DE-A- 3 938 766
- DE-B- 1 115 978
- FR-A- 2 425 190
- GB-A- 2 105 966
- US-A- 3 893 680

## Description

This invention relates to a gravity actuated, moveable mounting. In particular, the invention relates to such a mounting suitable for attachment to an apparatus that is periodically inverted, or at least tilted from one orientation to another. An example of such an apparatus is a reversible plough, on which it is desirable to present e.g. a depth sensor in an operative position regardless of which way up the plough is in use.

In GB-A-2.105.966 a reversible plough is shown having a gauge wheel which pivots from one extreme position to another extreme position under influence of its own weight, upon turning the plough body form one operative position to another. Means are provided to control the load on the tractor in response to the load applied to the gauge wheel. However, no depth sensors are provided to measure the depth of the plough shares.

It's an object of the present invention to provide a reversible plough having only a single sensor for measuring the depth of the plough, irrespective of the operative position of the plough body.

According to the invention, there is provided a reversible plough including a gravity-actuated, moveable mounting comprising :
- a shaft rotatably secured on the mounting;
- a mass secured to the shaft in a position radially spaced from its axis of rotation; and
- a retainer retaining an invertible article, secured to the shaft for rotation therewith, the arrangement being such that the action of gravity on the mass causes the retainer to occupy a first predetermined position relative to the mounting and on partial or complete inversion of the mounting to occupy a second position relative thereto.

The plough is characterized in that :
- the invertible article is a plough depth sensor of the type capable of generating signals indicative of the distance of the lower end of the sensor from e.g. the ground; and
- the mounting further comprises means for indicating the position of the mounting.

The mounting advantageously permits the depth sensor always to be presented at the same orientation relative to the plough, regardless of the position of the plough. The mounting of the invention is cheap and simple to manufacture, and obviates the need e.g. for respective depth sensors associated with each position of use of the plough.

Preferably the mounting includes a biasing member for biasing the retainer towards its first or second position, depending on the position of the mounting. In preferred embodiments, the biasing member includes an elastic member acting between a rotatable part of the mounting and a point fixed relative to the mounting. In a particularly preferred embodiment, the biasing member operates in an "over centre" action, whereby to bias the mounting towards its first or second position only when gravity acts on the mass to bias the mounting toward the respective first or second position.

These features advantageously provide an action for the mounting that is positive. The use of a biasing member to bias the mounting to its first or second position means that e.g. oscillations of the article to which the mounting is secured have a minimal effect on the position of the mounting in use.

Preferably the biasing member is pivotably secured at the point fixed relative to the mounting; and optionally also pivotably secured to the rotatable part of the mounting. These features facilitate the "over centre" action of the mounting.

Conveniently the mounting includes a mounting arm for the mass, the biasing member acting between the said arm and a point fixed relative to the journal.

The use of a mounting advantageously spaces the mass from the axis of rotation of the rotatable part, and provides a convenient attachment point for one end of e.g. a resilient member such as a spring serving as the biasing member.

In preferred embodiments the indicator of the position of the mounting includes one or more transducers for generating electrical signals indicative of the position of the mounting.

Conveniently, the mounting includes a pair of microswitches operable by a moveable part of the mounting to generate electrical signals indicative of the mounting occupying its first and second positions respectively.

Preferably the mounting includes a frame fixedly supporting the journal, and the microswitches conveniently are secured at respective, spaced locations on the frame for engagement by the moveable part of the mounting when the mounting occupies its respective first and second positions.

These features confer an advantageously compact configuration on the mounting of the invention.

Preferably the frame includes guides for the moveable part of the mounting that operates the or each transducer. In one embodiment of the invention, the transducers are configured as microswitches disposed at the ends of the guides along which the moveable part of the mounting travels. This configuration is compact and reliable in operation.

Preferably the moveable part is constituted as the mounting arm for the mass. Alternatively, another moveable part of the mounting may be thus employed. For example, the retainer referred to hereinabove may equally readily be engageable with the transducer(s) on operation of the mounting.

According to a further aspect of the invention there is provided a method of calibrating a depth sensor of a reversible implement such as the reversible plough (7) mounted on a vehicle (5), the depth sensor (17) being secured on the implement (7) via a mounting (10) according to any of the Claims 1 to 14; and
the method comprising the steps of:
(I) raising a first side of the vehicle to a height equivalent to a depth d₁ of operation of the implement when in use in a first orientation;
(ii) placing a surface at a first distance from the sensor equivalent to the distance measured by the sensor during operation of the implement at said depth d₁ in said first orientation;
(iii) causing the distance sensor to emit a first signal;
(iv) recording the first signal as a calibration value associated with said first depth d₁ and said first orientation of the implement;
(v) lowering the first side of the vehicle;
(vi) inverting the implement to occupy a second orientation;
(vii) raising the other side of the vehicle to a height equivalent to a depth d₂ of operation of the implement when in use in said second orientation;
(viii) placing a surface at a second distance from the sensor equivalent to a further distance measured by the sensor during operation of the implement at said depth d₂ in said second orientation;
(ix) causing the distance sensor to emit a second signal;
(xi) recording the second signal as a calibration signal associated with the second depth d₂ and the second orientation of the implement.

There now follows a description of a preferred embodiment of the invention, by way of example, with reference being made to the accompanying drawings in which:
Figure 1 shows an apparatus in accordance with the invention secured to a reversible plough;
Figure 2 shows part of the Figure 1 arrangement, viewed from the other side of the plough, in greater detail; and
Figure 3 shows a method of calibrating a plough depth sensor mounted via an apparatus according to the invention.

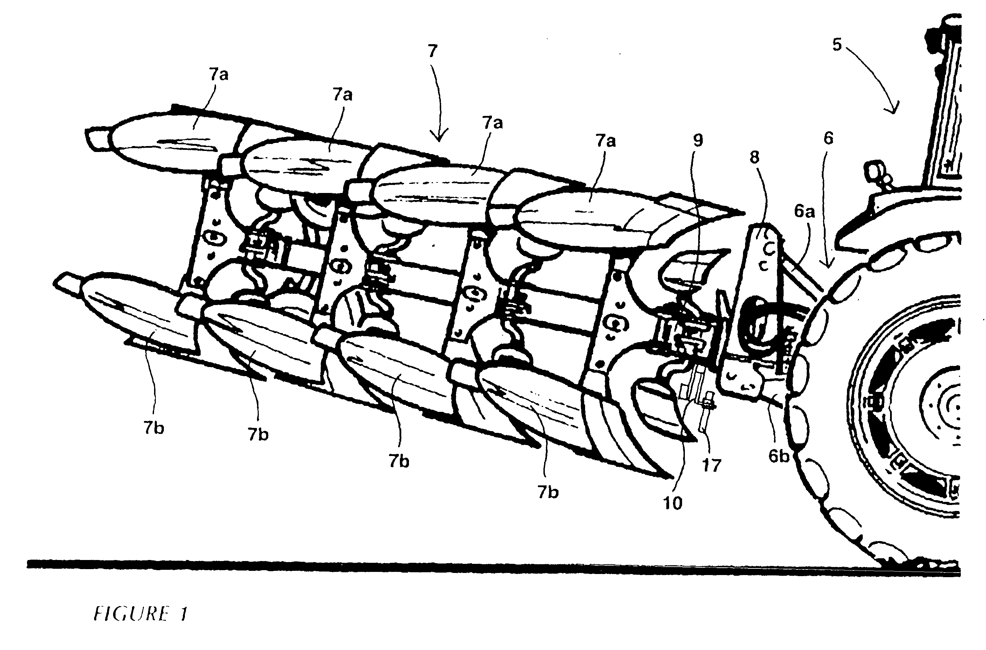

Referring to the drawings and in particular Figure 1, there is shown the rear part of a tractor 5 having a conventional three point hitch 6, two of the limbs 6a, 6b of which are visible. A reversible, fully mounted plough 7 is secured to the hitch 6 by means of an intermediate frame 8. The upper and lower shares of the plough 7 are indicated by reference numerals 7a and 7b.

A mounting 10 in accordance with the invention for an ultrasound depth sensor 17 is shown secured to the central member 9 of plough 7, towards the forwardmost end thereof. This location of mounting 10 is convenient since it allows operation of mounting 10 (in a manner described below) and depth sensor 17 (in a *per se* known manner) without any risk of soil clogging the sensor 17. However, other locations for mounting 10 are possible.

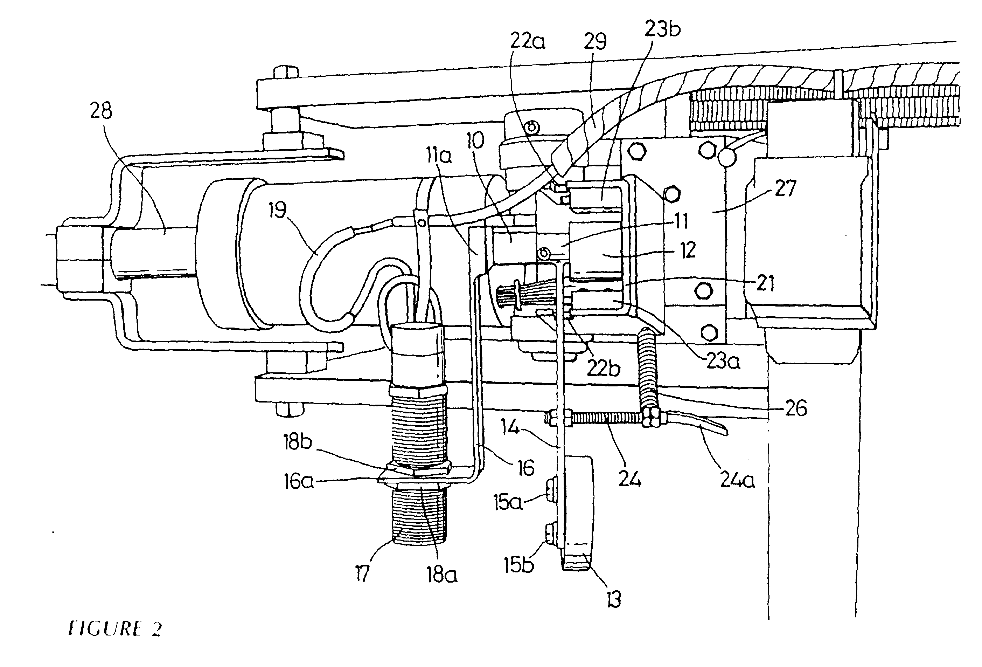

Referring to Figure 2, mounting 10 includes a rotatable, generally cylindrical shaft 11 supported in cantilever fashion protruding from an annular journal bearing 12. A mass in the form of metal disc 13 is secured to shaft 11 at a position spaced radially from the pivot axis of shaft 11 by virtue of mounting arm 14. In the orientation of the mounting shown in Figure 2 the upper end of mounting arm 14 is secured to shaft 11 by welding. Metal disc 13 is secured to arm 14 by means of conventional screws 15a and 15b.

The free end 11a of shaft 11 has welded thereto a retainer in the form of a radial arm 16 terminating in a 90° crank 16a at its end remote from shaft 11. Crank 16a includes a through-going aperture for retention therein of an invertible article that is intended to be secured in the mounting. In the embodiment shown, the invertible article is an ultrasonic depth sensor 17, the emitter/receiver of which faces downwardly.

Depth sensor 17, which is *a per se* known item, has a threaded, cylindrical body that is retained in the through-going aperture in crank 16a by virtue of lock nuts 18a, 18b threaded onto the body of depth sensor 17 to clamp about crank 16a. Of course, various other retention means, such as clamps, adhesive pads and magnets may be employed in replacement of or in addition to the aperture and locknut arrangement described for retaining the invertible article.

A conventional cable 19 extends from the upper end of depth sensor 17, for transmission of electrical signals indicative of the distance of the lower end of sensor 17 from e.g. the ground.

Cable 19 is connected e.g. to a suitable processor, that may be incorporated into a CAN (controller area network) for controlling the functions of the apparatus to which the mounting 10 is secured.

Journal 12 is secured to a generally U-shaped frame member 21, so that shaft 11 protruding from journal 12 extends generally parallel to the arms of the U. When the mounting is oriented as shown in Figure 1, the arms of the U lie horizontal one above the other. The arms include respective guides in the form of notches 22a, 22b that are aligned with one another and with the locus of mounting arm 14, whose motion is described below.

Respective microswitches 23a and 23b are secured to the arms of the U of the frame member 21 adjacent the notches 22a, 22b for engagement by the mounting arm 14 in a manner to be described below.

A threaded rod 24 extends perpendicular to mounting arm 14 and has pivotably secured at its free end 24a a biasing member in the form of elastic tensile spring 26. The opposite end of tensile spring 26 is pivotably secured to the exterior of frame member 21. Thus, one end of spring 26 is as a result pivotably secured to a location fixed relative to the number 10.

Frame member 21 includes a mounting plate 27 having apertures for securing of the mounting 10 via screws to an apparatus intended to tilt or invert in use.

In the example shown, the apparatus to which the mounting 10 is secured is a reversible plough. Some components of the plough, such as a plough width adjusting actuator 28, are visible in Figure 2.

As is well known, the shares of a plough are set at an angle to the direction of motion of a tractor towing the plough. Since the tractor (and hence the plough) reverses its direction of travel at the end of each pass along a field when ploughing, the plough has to be inverted at the end of each pass (usually as the tractor turns in the headland) in order to ensure that the furrows created by the plough all face in the same direction. The plough may include suitable powered actuators such as hydraulic cylinders that permit inversion of the plough as required.

It is frequently desirable for the tractor operator (or a microprocessor monitoring the operation of the plough) to receive information on the depth to which ploughing occurs. It is therefore known to secure a depth sensor such as the sensor 17 of Figure 2 to the plough for measuring the distance between a datum point on the plough and the surface of the soil being tilled.

Hitherto, on so called reversible ploughs (i.e. those ploughs that are capable of inversion as described hereinabove) it has been known to provide two depth sensors. One depth sensor operates when the plough occupies its first orientation, and the other when the plough is inverted.

It will be appreciated that the mounting of the invention obviates the need for two depth sensors. This is because on inversion of the plough shown in Figure 1, gravity acts on the mass 13 as the plough turns, in order to cause pivoting of shaft 11 in journal 12. This causes retainer 16 to rotate about the pivot axis of shaft 11, thereby inverting depth sensor 17 substantially simultaneously with the plough.

Spring 26 tends to bias the mounting 10 towards one or other of its operative positions. Thus the mounting 10 does not invert until the plough has itself turned over by more than a predetermined minimum angular distance sufficient for the gravity force acting on mass 13 to overcome the biasing force of spring 26. Once this angular inversion of the plough has been attained, on continued rotation of the plough the mounting 10 moves rapidly towards its alternative position, by virtue of the "over centre" action caused by spring 26.

As is clear from Figure 2, the pivotable mounting of the ends of spring 26 facilitates this action.

As the arm 14 supporting disc 13 approaches each of its operative positions, it engages and is guided by one of the notches 22a or 22b (as appropriate). This causes arm 14 to engage and actuate one or other (as appropriate) of the microswitches 23a, 23b. This in turn sends an electrical signal via appropriate cabling 29 indicative of the orientation of the plough. Since the mean height of the plough relative to e.g. the tractor towing it varies as between the two possible positions of the plough, the use of the microswitches (or other transducers) obviates the need for repeated recalibration of the depth sensor each time the plough inverts. On the contrary, the microswitches advantageously minimise the number of calibrations to two (i.e. one for each orientation of the plough).

Calibration of the depth sensor is necessary for several reasons, including the following :
- The emitter of depth sensor 17 is unlikely in practice to be level with the axis about which the plough 7 rotates when inverting. Thus the emitter will be at different heights relative to the surface of the soil depending on which way up the plough is orientated.
- And since the tractor has one wheel in the furrow when ploughing, the depth sensor 17 does not extend vertically downwardly, with the result that the distance between the emitter of the sensor 17 and the surface of the soil is not the same as it would be if the tractor stood on level ground.

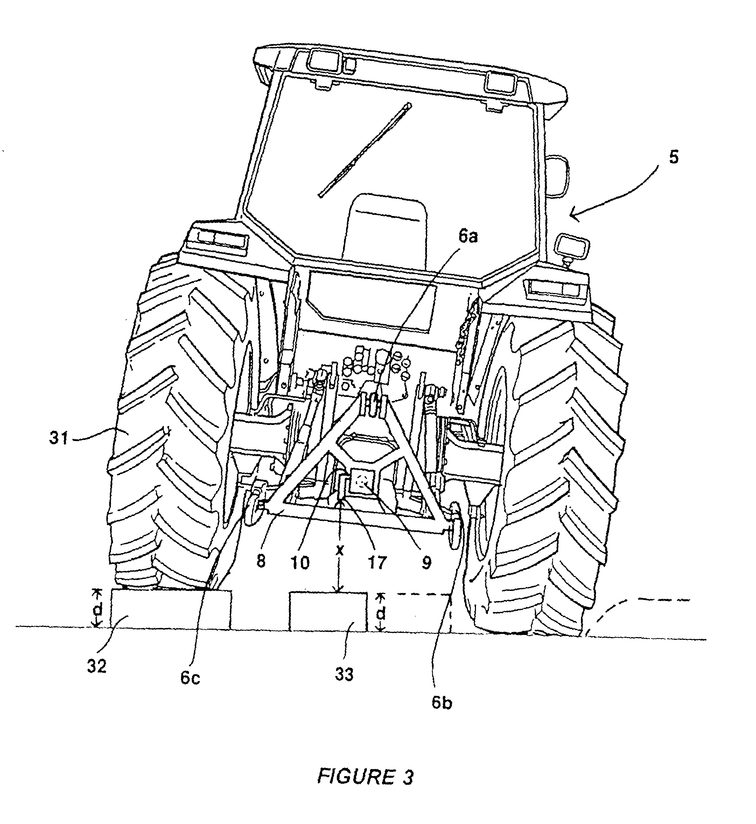

Referring now to Figure 3, there follows a description of a method according to the invention for calibrating the depth sensor 17 of a plough 7 having a mounting 10 according to the invention.

Figure 3 is a rear view of tractor 5 showing intermediate frame 8 and mounting 10, but omitting the remainder of plough 7 which would otherwise obscure mounting 10.

In the calibration method of the invention one rear wheel (in Figure 3 the left hand rear wheel 31) of tractor 5 is raised onto a block 32 of predetermined height d equivalent to the depth of a typical furrow that the shares of plough 7 are set to plough. This gives tractor 5 the lateral inclination shown in Figure 3, which simulates the orientation of tractor 5 when ploughing such a furrow.

Raising of wheel 31 may be achieved by jacking tractor 5 or, more preferably, by driving wheel 31 onto a ramp incorporated into block 32.

A similar block to block 32 visible in Figure 3 may be used to raise the left hand front wheel of tractor 5, fully to simulate the tilting of the tractor during ploughing operations.

Once tractor 5 has been tilted as described, a further block 33 of height d is placed on the ground beneath sensor 17. Block 33 simulates the surface of soil to one side of a ploughed furrow, shown schematically by dotted lines in Figure 3.

With block 33 in place, the distance x₁ between the emitter of sensor 17 and the upper surface of block 33, is measured. This distance x₁ may be stored in a processor (on board tractor 5 for processing output signals from sensor 17) and used during real time operation of sensor 17 during ploughing to the aforesaid depth as a calibration value for sensor signals encoded to indicate the orientation of plough 7 at the time of recording the distance x₁. Such encoding is achieved through the settings of microswitches 23 during the calibration procedure shown in Figure 3.

Block 33 is then removed and wheel 31 lowered to ground level. Plough 7 is inverted, which causes mounting 10 to invert in the manner described above. This in turn causes the configuration of the microswitches 23 to invert, encoding signals from sensor 17 in a different way than previously. The calibration method is then repeated, but on this occasion right hand rear wheel 35 (and if necessary the right hand front wheel) of tractor 5 is raised on a block 32 to simulate the effect of the tractor facing in the opposite direction with its wheels on the left hand side in the furrow. Measurement of the distance x₂ from the sensor emitter to block 33 gives a further calibration value, for use when the mounting 10 occupies its second position.

It will be appreciated that the calibration process described results in the storing of two calibration values of distance x. However, ploughs generally are such that the ploughing depth is adjustable. Thus it would be desirable to repeat the calibration procedure for at least one (and preferably more than one) further value of height d, from which a calibration curve may be interpolated that may be used to provide calibration values for a range of ploughing depths. The calibration curve may be stored, for example, as a look-up table in the memory of the processor previously mentioned. Clearly under such circumstances it would be necessary to employ a series of sets of blocks 32, 33 of different heights d.

Thus the mounting of the invention advantageously permits consistent depth measurements to be taken using a reversible plough.

## Claims

1. A reversible plough (7) including a gravity-actuated, moveable mounting (10) comprising :
- a shaft (11) rotatably secured on the mounting (10);
- a mass (13) secured to the shaft (11) in a position radially spaced from its axis of rotation; and
- a retainer (16) retaining an invertible article, secured to the shaft (11) for rotation therewith, the arrangement being such that the action of gravity on the mass (13) causes the retainer (16) to occupy a first predetermined position relative to the mounting (10) and on partial or complete inversion of the mounting (10) to occupy a second position relative thereto; and
**characterized in that** :
- the invertible article is a plough depth sensor (17) of the type capable of generating signals indicative of the distance of the lower end of the sensor from e.g. the ground; and
- the mounting (10) further comprises means (23a, 23b) for indicating the position of the mounting (10).

2. A plough according to Claim 1 **characterized in that** the mounting (10) further includes a biasing member (24, 26) for biasing the retainer (16) towards its first or second position, depending on the position of the mounting (10).

3. A plough according to Claim 2 **characterized in that** the biasing member (24, 26) includes an elastic member (26) acting between a rotatable part (14) of the mounting (10) and a point (21) fixed relative to the mounting (10).

4. A plough according to Claim 2 or Claim 3 **characterized in that** the biasing member (24, 26) operates in an "over centre" action, whereby to bias the retainer (16) towards its first or second position only when gravity acts on the mass (13) to bias the mounting (10) towards the respective first or second position.

5. A plough according to Claim 4 **characterized in that** the biasing member (24, 26) is pivotably secured at the point fixed relative to the mounting (10), whereby to facilitate its "over centre" action.

6. A plough according to Claim 4 or Claim 5 **characterized in that** the biasing member (24, 26) is pivotably secured to said rotatable part of the mounting (10).

7. A plough according to any of Claims 2 to 6 **characterized in that** the mounting (10) further includes a mounting arm (14) for the mass (13), the biasing member (24, 26) acting between the said arm (14) and a point fixed relative to the mounting (10).

8. A plough according to any of the preceding claims **characterized in that** the means (23a, 23b) for indicating the position of the mounting (10) includes one or more transducers (23a, 23b) for generating electrical signals indicative of the position of the mounting (10).

9. A plough according to Claim 8 **characterized in that** the mounting (10) further includes a pair of microswitches (23a, 23b) operable by a moveable part (14) of the mounting (10) to generate electrical signals indicative of the mounting (10) occupying first and second positions respectively.

10. A plough according to any of the preceding claims **characterized in that** the shaft (11) is rotatably secured in a journal (12), the mounting (10) including a frame (21) fixedly supporting the journal (12).

11. A plough according to Claim 10 when dependent from Claim 9 **characterized in that** the microswitches (23a, 23b) are secured at respective, spaced locations on the frame (21) for engagement by said moveable part (14) of the mounting (10) when the mounting (10) occupies its respective first and second positions.

12. A plough according to Claim 10 or Claim 11, **characterized in that** the frame (21) includes guides (22a, 22b) for the moveable part (14) of the mounting (10) that operates the or each transducer (23a, 23b).

13. A plough according to any of the Claims 9 to 12 when dependent from Claim 7, **characterized in that** the moveable part is constituted as the mounting arm (14) for the mass (13).

14. A plough according to any of the preceding claims **characterized in that** the plough depth sensor (17) is secured in the retainer (16) of the mounting (10).

15. A method of calibrating the depth sensor (17) of a reversible implement such as the reversible plough (7) mounted on a vehicle (5), the depth sensor (17) being secured on the implement (7) via a mounting (10) according to any of the Claims 1 to 14; and
**characterized in that** the method comprises the steps of:
(i) raising a first side of the vehicle (5) to a height equivalent to a depth d₁ of operation of the implement (7) when in use in a first orientation;
(ii) placing a surface at a first distance from the sensor (17) equivalent to the distance measured by the sensor (17) during operation of the implement (7) at said depth d₁ in said first orientation;
(iii) causing the distance sensor (17) to emit a first signal;
(iv) recording the first signal as a calibration value associated with said first depth d₁ and said first orientation of the implement (7);
(v) lowering the first side of the vehicle (5);
(vi) inverting the implement (7) to occupy a second orientation;
(vii) raising the other side of the vehicle (5) to a height equivalent to a depth d₂ of operation of the implement (7) when in use in said second orientation;
(viii) placing a surface at a second distance from the sensor (17) equivalent to a further distance measured by the sensor (17) during operation of the implement (7) at said depth d₂ in said second orientation;
(ix) causing the distance sensor (17) to emit a second signal;
(xi) recording the second signal as a calibration signal associated with the second depth d₂ and the second orientation of the implement (7).

16. A method according to Claim 15 **characterized in that** the steps (i) to (xi) are repeated for one or more further values of d₁ and d₂ corresponding to further depths of operation of the implement (7) in said first and second orientations respectively.

## Patentansprüche

1. Kehrpflug (7), der eine durch Schwerkraft betätigte bewegliche Aufhängung (10) einschließt, mit:
- einer Welle (11), die drehbar auf der Aufhängung (10) befestigt ist;
- einer Masse (13), die an der Welle (11) in einer Position mit radialem Abstand von deren Drehachse angeordnet ist; und
- einem Halter (16), der einen umkehrbaren Gegenstand hält, der an der Welle (11) für eine Drehung mit dieser befestigt ist, wobei die Anordnung derart ist, daß die Wirkung der Schwerkraft auf die Masse (13) bewirkt, daß der Halter (16) eine erste vorgegebene Position bezüglich der Aufhängung (10) einnimmt, und bei einer teilweisen oder vollständigen Umkehrung der Aufhängung (10) eine zweite Position relativ hierzu einnimmt;
**dadurch gekennzeichnet, daß**:
- der umkehrbare Gegenstand ein Pflugtiefen-Sensor (17) von der Art ist, die in der Lage ist, Signale zu erzeugen, die die Entfernung des unteren Endes des Sensors von beispielsweise dem Boden anzeigen; und
- die Aufhängung (10) weiterhin Einrichtungen (23a, 23b) zur Anzeige der Position der Aufhängung (10) umfaßt.

2. Pflug nach Anspruch 1, **dadurch gekennzeichnet, daß** die Aufhängung (10) weiterhin ein Vorspannelement (24, 25) zur Vorspannung des Halters (16) in Richtung auf seine erste oder zweite Stellung in Abhängigkeit von der Position der Aufhängung (10) einschließt.

3. Pflug nach Anspruch 2, **dadurch gekennzeichnet, daß** das Vorspannelement (24, 26) ein elastisches Element (26) einschließt, das zwischen einem drehbaren Teil (14) der Aufhängung (10) und einem Punkt (21) wirkt, der bezüglich der Aufhängung (10) festgelegt ist.

4. Pflug nach Anspruch 2 oder 3, **dadurch gekennzeichnet, daß** das Vorspannelement (24, 26) in einer "Sprungwerk"-Wirkung arbeitet, wodurch der Halter (16) in Richtung auf seine erste oder zweite Position nur dann vorgespannt wird, wenn die Schwerkraft auf die Masse (13) wirkt, um die Aufhängung (10) in die jeweilige erste oder zweite Position vorzuspannen.

5. Pflug nach Anspruch 4, **dadurch gekennzeichnet, daß** das Vorspannelement (24, 26) schwenkbar an dem gegenüber der Aufhängung (10) festgelegten Punkt befestigt ist, um auf diese Weise seine "Sprungwerk"-Wirkung zu erleichtem.

6. Pflug nach Anspruch 4 oder 5, **dadurch gekennzeichnet, daß** das Vorspannelement (24, 26) schwenkbar an dem drehbaren Teil der Aufhängung (10) befestigt ist.

7. Pflug nach einem der Ansprüche 2 bis 6, **dadurch gekennzeichnet, daß** die Aufhängung (10) weiterhin einen Befestigungsarm (14) für die Masse (13) einschließt, wobei das Vorspannelement (24, 26) zwischen dem Arm (14) und einem gegenüber der Aufhängung (10) festgelegten Punkt wirkt.

8. Pflug nach einem der vorhergehenden Ansprüche, **dadurch gekennzeichnet, daß** die Einrichtung (23a, 23b) zur Anzeige der Position der Aufhängung (10) einen oder mehrere Wandler (23a, 23b) zur Erzeugung elektrischer Signale einschließt, die die Position der Aufhängung (10) anzeigen.

9. Pflug nach Anspruch 8, **dadurch gekennzeichnet, daß** die Aufhängung (10) weiterhin ein Paar von Mikroschaltern (23a, 23b) einschließt, die durch einen beweglichen Teil (14) der Aufhängung (10) betätigbar sind, um elektrische Signale zu erzeugen, die die Einnahme der ersten bzw. zweiten Position durch die Aufhängung (10) anzeigen.

10. Pflug nach einem der vorhergehenden Ansprüche, **dadurch gekennzeichnet, daß** die Welle (11) drehbar in einem Drehlager (12) gelagert ist, wobei die Aufhängung (10) weiterhin einen Rahmen (21) einschließt, der das Drehlager (12) starr haltert.

11. Pflug nach Anspruch 10, unter Rückbeziehung auf Anspruch 9, **dadurch gekennzeichnet, daß** die Mikroschalter (23a, 23b) an jeweiligen mit Abstand angeordneten Positionen auf dem Rahmen (21) für einen Eingriff mit dem beweglichen Teil (14) der Aufhängung (10) befestigt sind, wenn die Aufhängung (10) ihre jeweiligen ersten und zweiten Positionen einnimmt.

12. Pflug nach Anspruch 10 oder 11, **dadurch gekennzeichnet, daß** der Rahmen (21) Führungen (22a, 22b) für den beweglichen Teil (14) der Aufhängung (10) einschließt, der den oder jeden Wandler (23a, 23b) betätigt.

13. Pflug nach einem der Ansprüche 9 bis 12 unter Rückbeziehung auf Anspruch 7, **dadurch gekennzeichnet, daß** der bewegliche Teil als der Befestigungsarm (14) für die Masse (13) gebildet ist.

14. Pflug nach einem der vorhergehenden Ansprüche, **dadurch gekennzeichnet, daß** der Pflugtiefen-Sensor (17) in dem Halter (16) der Aufhängung (10) befestigt ist.

15. Verfahren zum Eichen des Tiefensensors (17) eines umkehrbaren Anbaugeräts, wie zum Beispiel eines Kehrpflugs (7), das bzw. der auf einem Fahrzeug (5) befestigt ist, wobei der Tiefensensor (17) an dem Anbaugerät (7) über eine Aufhängung (10) gemäß einem der Ansprüche 1 bis 14 befestigt ist;
**dadurch gekennzeichnet, daß** das Verfahren die folgenden Schritte umfaßt:
(i) Anheben einer ersten Seite des Fahrzeugs (5) auf eine Höhe, die einer Betriebstiefe d₁ des Anbaugeräts (7) äquivalent ist, wenn dieses in einer ersten Ausrichtung im Betrieb ist;
(ii) Anordnen einer Oberfläche an einer ersten Entfernung von dem Sensor (17), die äquivalent zu der Entfernung ist, die von dem Sensor (17) während des Betriebs des Anbaugeräts (7) in der Tiefe d₁ bei der ersten Ausrichtung gemessen wird;
(iii) Bewirken, daß der Entfernungssensor (17) ein erstes Signal aussendet;
(iv) Aufzeichnen des ersten Signals als einen Eichwert, der der ersten Tiefe d₁ und der ersten Ausrichtung des Anbaugeräts (7) zugeordnet ist,
(v) Absenken der ersten Seite des Fahrzeugs (5);
(vi) Umkehren des Anbaugeräts (7) derart, daß dieses eine zweite Ausrichtung einnimmt;
(vii) Anheben der anderen Seite des Fahrzeugs (5) auf eine Höhe, die einer Betriebstiefe d₂ des Anbaugeräts (7) äquivalent ist, wenn diese in der zweiten Ausrichtung im Gebrauch ist;
(viii) Anordnen einer Oberfläche in einer zweiten Entfernung von dem Sensor (17), die äquivalent zu einer weiteren Entfernung ist, die von dem Sensor (17) während des Betriebs des Anbaugeräts (7) in der Tiefe d₂ bei der zweiten Ausrichtung gemessen wird;
(ix) Bewirken, daß der Entfemungssensor (17) ein zweites Signal aussendet;
(xi) Aufzeichnen des zweiten Signals als ein Eichsignal, das der zweiten Tiefe d₂ und der zweiten Ausrichtung des Anbaugeräts (7) zugeordnet ist.

16. Verfahren nach Anspruch 15, **dadurch gekennzeichnet, daß** die Schritte (i) bis (xi) für einen oder mehrere Werte von d₁ und d₂ entsprechend weiteren Betriebstiefen des Anbaugeräts (7) in den ersten bzw. zweiten Ausrichtungen wiederholt werden.

## Revendications

1. Charrue réversible (7) comprenant un montage mobile (10) actionné par gravité et comportant:
- un arbre (11) fixé rotativement sur le montage (10) ;
- une masse (13) fixée sur l'arbre (11) dans une position radialement écartée de son axe de rotation; et
- un organe de retenue (16), retenant un composant réversible, fixé sur l'arbre (11) en rotation par rapport à ce dernier, l'arrangement étant tel que l'action de la gravité sur la masse (13) entraîne l'organe de retenue (16) à occuper une première position prédéterminée par rapport au montage (10) et, lors d'un retournement partiel ou complet du montage (10), à occuper une seconde position par rapport à ce dernier.
La charrue est **caractérisée en ce que** :
- le composant réversible est un détecteur de profondeur de charrue (17) du type capable de générer des signaux indicateurs de la distance entre l'extrémité inférieure du capteur et par exemple le sol; et
- le montage (10) comprend en outre des moyens (23a; 23b) destinés à indiquer la position du montage (10).

2. Charrue selon la revendication 1, **caractérisée en ce que** le montage (10) comprend en outre un organe de contrainte (24, 26) destiné à contraindre l'organe de retenue (16) vers sa première ou seconde position, en fonction de la position du montage (10).

3. Charrue selon la revendication 2, **caractérisée en ce que** l'organe de contrainte (24, 26) comprend un élément élastique (26) agissant entre une pièce rotative (14) du montage (10) et un point (21) fixe par rapport au montage (10).

4. Charrue selon la revendication 2 ou la revendication 3, **caractérisée en ce que** l'organe de contrainte (24, 26) fonctionne comme un "mouvement à détente brusque", de manière à contraindre l'organe de retenue (16) vers sa première ou seconde position uniquement lorsque la gravité agit sur la masse (13) afin de contraindre le montage (10) respectivement vers la première ou la seconde position.

5. Charrue selon la revendication 4, **caractérisée en ce que** l'organe de contrainte (24, 26) est fixé avec pivotement au point fixe par rapport au montage (10), de manière à faciliter son mouvement "à détente brusque".

6. Charrue selon la revendication 4 ou la revendication 5, **caractérisée en ce que** l'organe de contrainte (24, 26) est fixé avec pivotement à ladite pièce rotative du montage (10).

7. Charrue selon l'une quelconque des revendications 2 à 6, **caractérisée en ce que** le montage (10) comprend en outre un bras de montage (14) pour la masse (13), l'organe de contrainte (24, 26) agissant entre ledit bras (14) et un point fixe par rapport au montage (10).

8. Charrue selon l'une quelconque des revendications précédentes, **caractérisée en ce que** les moyens (23a, 23b) d'indication de la position du montage (10) comprennent un ou plusieurs transducteurs (23a, 23b) destinés à générer des signaux électriques indicateurs de la position du montage (10).

9. Charrue selon la revendication 8, **caractérisée en ce que** le montage (10) comprend en outre une paire de microrupteurs (23a, 23b) pouvant être actionnés par une pièce mobile (14) du montage (10) pour générer des signaux électriques indicateurs des première et seconde positions respectives occupées par le montage (10).

10. Charrue selon l'une quelconque des revendications précédentes, **caractérisée en ce que** l'arbre (11) est fixé rotativement dans un palier (12), le montage (10) comprenant un châssis (21) soutenant fixement le palier (12).

11. Charrue selon la revendication 10 lorsqu'elle dépend de la revendication 9, **caractérisée en ce que** les microrupteurs (23a, 23b) sont fixés à des emplacements écartés respectifs sur le châssis (21) afin d'être engagés par ladite pièce mobile (14) du montage (10) lorsque le montage (10) occupe ses première et seconde positions respectives.

12. Charrue selon la revendication 10 ou la revendication 11, **caractérisée en ce que** le châssis (21) comprend des guides (22a, 22b) pour la pièce mobile (14) du montage (10) qui actionne le ou chaque transducteur (23a, 23b).

13. Charrue selon l'une quelconque des revendications 9 à 12 lorsqu'elles dépendent de la revendication 7, **caractérisée en ce que** la pièce mobile est constituée par le bras de montage (14) de la masse (13).

14. Charrue selon l'une quelconque des revendications précédentes, **caractérisée en ce que** le détecteur de profondeur (17) de la charrue est fixé dans l'organe de retenue (16) du montage (10).

15. Méthode de calibrage d'un détecteur de profondeur (17) d'un outil réversible, tel qu'une charrue réversible (7) montée sur un véhicule (5), le détecteur de profondeur (17) étant fixé à l'outil (7) via un montage (10) selon l'une quelconque des revendications 1 à 14; et
la méthode comprenant les étapes:
(i) de soulèvement d'un premier côté du véhicule (5) à une hauteur équivalente à une profondeur d₁ de fonctionnement de l'outil (7) lorsqu'il est utilisé dans une première orientation;
(ii) de positionnement d'une surface à une première distance du détecteur (17) équivalente à la distance mesurée par le détecteur (17) pendant le fonctionnement de l'outil (7) à ladite profondeur d₁ dans ladite première orientation;
(iii) de commandement du détecteur (17) de distance pour émettre un premier signal;
(iv) d'enregistrement du premier signal en tant que valeur de calibrage associée à ladite première profondeur d₁ et à ladite première orientation de l'outil (7);
(v) d'abaissement du premier côté du véhicule (5);
(vi) de retournement de l'outil (7) pour occuper une seconde orientation;
(vii) de soulèvement de l'autre côté du véhicule (5) à une hauteur équivalente à une profondeur d₂ de fonctionnement de l'outil (7) lorsqu'il est utilisé dans ladite seconde orientation;
(viii) de positionnement d'une surface à une seconde distance du détecteur (17) équivalente à une autre distance mesurée par le détecteur (14) pendant le fonctionnement de l'outil (7) à ladite profondeur d₂ dans ladite seconde orientation;
(ix) de commandement du détecteur de distance (17) pour émettre un second signal;
(xi) d'enregistrement du second signal en tant que valeur de calibrage associée à ladite seconde profondeur d₂ et à ladite seconde orientation de l'outil (7).

16. Méthode selon la revendication 15, **caractérisée en ce que** les étapes (i) à (xi) sont répétées pour une ou plusieurs valeur(s) supplémentaire(s) de d₁ et d₂ correspondant aux profondeurs supplémentaires de fonctionnement de l'outil (7) dans lesdites première et seconde orientations respectives.
